# EUROPEAN PATENT APPLICATION

(11) **EP 4 810 577 A1**
(43) Date of publication of application: **23.09.2026**
(21) Application number: 26164962.8
(22) Date of filing: 16.03.2026
(51) Int. Cl.: C09D 11/328, C09D 11/38, D06P 5/30

(54) **INK JET INK COMPOSITION, RECORDING METHOD, AND METHOD FOR PRODUCING INK JET INK COMPOSITION**

(30) Priority: 17.03.2025 JP 2025042800
(71) Applicant: Seiko Epson Corporation, Tokyo 160-8801 (JP)
(72) Inventor: UCHIDA, Kenta, Suwa-shi, 392-8502 (JP); KOMATSU, Hidehiko, Suwa-shi, 392-8502 (JP)
(74) Representative: Lewis Silkin LLP

(57) **Abstract**

The ink jet ink composition according to an embodiment of the present disclosure contains water, a reactive dye, and a water-soluble compound with a melting point of 50°C or higher, and the content of the water-soluble compound with a melting point of 50°C or higher is 10% by mass or more and 40% by mass or less with respect to the total amount of the ink composition.

## Description

The present application is based on, and claims priority from JP Application Serial Number 2025-042800, filed March 17, 2025, the disclosure of which is hereby incorporated by reference herein in its entirety.

### BACKGROUND

### 1. Technical Field

The present disclosure relates to an ink jet ink composition, a recording method, and a method for producing an ink jet ink composition.

### 2. Related Art

Ink jet recording methods can record high-definition images with a relatively simple apparatus and have been rapidly developed in various fields. In such a process of development, studies are being made on an ink composition containing a reactive dye and water as a solvent.

For example, JP-A-10-060324 describes an ink composition containing a reactive dye, and a medium containing at least one of a low melting point solid, an organic solvent, and a mixture of water and one or more water-soluble organic solvents.

However, there is a problem in obtaining good image quality and good clogging recoverability.

### SUMMARY

An aspect of an ink jet ink composition according to the present disclosure contains water, a reactive dye, and a water-soluble compound with a melting point of 50°C or higher, wherein a content of the water-soluble compound with a melting point of 50°C or higher is 10% by mass or more and 40% by mass or less with respect to a total amount of the ink composition.

An aspect of a recording method according to the disclosure includes an ejecting step of ejecting the ink jet ink composition of the aspect onto a fabric from an ink jet head.

An aspect of an ink jet ink composition according to the present disclosure is an ink jet ink composition containing an ink composition A containing a reactive dye and a water-soluble compound with a melting point of 50°C or higher, and with a content of a substance that is liquid in a 25°C, 1 atm environment of 20% by mass or less with respect to a total amount of the ink composition A, and an aqueous solution B containing water in an amount of 50% by mass or more with respect to a total amount of the aqueous solution B, wherein a content of the water-soluble compound with a melting point of 50°C or higher is 10% by mass or more and 40% by mass or less with respect to a total amount of the ink jet ink composition.

An aspect of a method for producing an ink jet ink composition according to the present disclosure is a method for producing an ink jet ink composition, the method including a mixing step of mixing an ink composition A containing a reactive dye and a water-soluble compound with a melting point of 50°C or higher, and an aqueous solution B containing water in an amount of 50% by mass or more with respect to a total amount of the aqueous solution B, wherein a content of the water-soluble compound with a melting point of 50°C or higher is 10% by mass or more and 40% by mass or less with respect to a total amount of the ink jet ink composition.

### BRIEF DESCRIPTION OF THE DRAWINGS

FIG. 1 is a flowchart diagram of a method for producing an ink jet ink composition according to an embodiment.
FIG. 2 is a schematic diagram of an ink jet head used in a recording method according to an embodiment.
FIG. 3 is a perspective view of a serial method ink jet apparatus used in the recording method according to an embodiment.
FIG. 4 is Table 1 showing the compositions and evaluation results of ink jet ink compositions according to examples.
FIG. 5 is Table 2 showing the compositions and evaluation results of ink jet ink compositions according to examples.
FIG. 6 is Table 3 showing the compositions of an ink composition A and an aqueous solution B.

### DESCRIPTION OF EMBODIMENTS

Hereinafter, embodiments of the present disclosure will be described. The embodiments described below describe examples of the present disclosure. The present disclosure is not limited to the following embodiments, and includes various modifications implemented within a range not changing the gist of the present disclosure. It is noted that not all of the configurations described below are essential configurations of the present disclosure.

In the present specification, a numerical range indicated by using "to" means a range including numerical values described before and after "to" as a lower limit value and an upper limit value.

In the present specification, "(meth)acrylic" means acrylic or methacrylic, and "(meth)acrylate" means acrylate or methacrylate.

### 1. Ink Jet Ink Composition (I)

The ink jet ink composition according to an embodiment of the present disclosure contains water, a reactive dye, and a water-soluble compound with a melting point of 50°C or higher, and the content of the water-soluble compound with a melting point of 50°C or higher is 10% by mass or more and 40% by mass or less with respect to the total amount of the ink composition.

From the viewpoint of obtaining good image quality, it is preferable that a water-based ink contains a reactive dye and has high permeability against permeable media such as cloth. When the permeability of the ink containing the reactive dye is low, banding unevenness due to a mounting error of an ink jet head, an ink droplet landing position deviation, or the like is likely to occur. Therefore, in the related art, a penetrating solvent is added to the ink for the purpose of increasing the permeability and the like.

However, as the penetrating solvent in the related art, a low boiling point solvent such as glycol ether is often used, and the solvent easily volatilizes near a nozzle inside the ink jet head, and thus there is a problem in the clogging recoverability and the intermittent stability.

On the other hand, when a high boiling point solvent such as glycerin is added, volatilization is inhibited, and the clogging recoverability and the intermittent stability can be improved in some cases. However, since the volatilization of water is inhibited, even when a water-based ink droplet lands on a permeable medium such as cloth, a decrease in surface tension along with the volatilization of water is unlikely to occur, and as a result, the permeability of the ink is low, and thus good image quality cannot be obtained.

In contrast, the ink jet ink composition according to the present embodiment can improve both the image quality and the clogging recoverability by containing the water-soluble compound with a melting point of 50°C or higher in a specific amount.

The water-soluble compound with a melting point of 50°C or higher tends to have a melting point higher than the environmental temperature near the nozzle, and is thus relatively less likely to volatilize, and can improve the clogging recoverability and the intermittent stability. In addition, since the water-soluble compound with a melting point of 50°C or higher is less likely to volatilize, the surface tension decreases as water preferentially volatilizes after the water-based ink droplet lands on a permeable medium such as cloth, and as a result, the permeability of the ink is high, and good image quality can be obtained.

Hereinafter, each component contained in the ink jet ink composition (hereinafter, may be simply referred to as "ink composition") according to the present embodiment will be described.

### 1.1 Water

The ink jet ink composition according to the present embodiment contains water. The water is not particularly limited, and examples thereof include pure water such as ion exchanged water, ultrafiltration water, reverse osmosis water, and distilled water, and ultrapure water in which ionic impurities are removed as much as possible. In addition, when water sterilized by ultraviolet irradiation, addition of hydrogen peroxide, or the like is used, the generation of fungi or bacteria can be prevented when an aqueous solution B is stored for a long period of time.

The content of water is not particularly limited, and is preferably 20% by mass or more, more preferably 30% by mass or more, even more preferably 40% by mass or more, particularly preferably 50% by mass or more, and more particularly preferably 60% by mass or more with respect to the total amount of the ink composition. The upper limit of the content of water is 90% by mass or less, preferably 85% by mass or less, more preferably 80% by mass or less, and particularly preferably 75% by mass or less with respect to the total amount of the ink composition.

### 1.2 Reactive Dye

The ink jet ink composition according to the present embodiment contains a reactive dye.

Examples of the reactive dye include yellow dyes such as C.I. Reactive Yellow 1, 2, 3, 4, 6, 7, 11, 12, 13, 14, 15, 16, 17, 18, 22, 23, 24, 25, 26, 27, 37, and 42; magenta dyes such as C.I. Reactive Red 1, 2, 3, 4, 5, 6, 7, 8, 11, 12, 13, 15, 16, 17, 19, 20, 21, 22, 23, 24, 28, 29, 31, 32, 33, 34, 35, 36, 37, 38, 39, 40, 41, 42, 43, 45, 46, 49, 50, 58, 59, 63, 64, and 245; cyan dyes such as C.I. Reactive Blue 1, 2, 3, 4, 5, 7, 8, 9, 13, 14, 15, 15:1, 17, 18, 19, 20, 21, 25, 26, 27, 28, 29, 31, 32, 33, 34, 37, 38, 39, 40, 41, 43, 44, and 46; orange dyes such as C.I. Reactive Orange 1, 2, 4, 5, 7, 11, 12, 13, 15, 16, 20, 30, 35, 56, 64, 67, 69, 70, 72, 74, 82, 84, 86, 87, 91, 92, 93, 95, and 107; and black dyes such as C.I. Reactive Black 1, 3, 4, 5, 7, 8, 11, 12, 14, 17, 21, 23, 26, 31, 32, 34, and 39.

One kind of the reactive dye may be used alone, or two or more kinds thereof may be used in combination.

The content of the reactive dye is not particularly limited, and is preferably 1% by mass to 30% by mass, more preferably 3% by mass to 25% by mass, even more preferably 5% by mass to 20% by mass, and particularly preferably 8% by mass to 17% by mass with respect to the total amount of the ink composition.

The ink jet ink composition according to the present embodiment may contain a coloring material other than the reactive dye apart from the reactive dye. Examples of the coloring material other than the reactive dye include a pigment, an acid dye, a direct dye, and a disperse dye.

### 1.3 Water-Soluble Compound with Melting Point of 50°C or higher

The ink jet ink composition according to the present embodiment contains a water-soluble compound with a melting point of 50°C or higher, and the content of the water-soluble compound with a melting point of 50°C or higher is 10% by mass or more and 40% by mass or less with respect to the total amount of the ink composition.

When the content of the water-soluble compound with a melting point of 50°C or higher is 10% by mass or more with respect to the total amount of the ink composition, the permeability of the ink can be sufficiently increased to improve the image quality, and the clogging recoverability and the intermittent stability can be improved. In addition, when the content of the water-soluble compound with a melting point of 50°C or higher is 40% by mass or less with respect to the total amount of the ink composition, the viscosity of the ink can be inhibited from being excessively increased, and the clogging recoverability and the intermittent stability can be prevented from being deteriorated.

The lower limit of the content of the water-soluble compound with a melting point of 50°C or higher is 10% by mass or more with respect to the total amount of the ink composition, but is preferably 13% by mass or more, more preferably 15% by mass or more, even more preferably 18% by mass or more, and particularly preferably 20% by mass or more from the viewpoint of the tendency of further improving the image quality, and the clogging recoverability and the intermittent stability.

The upper limit of the content of the water-soluble compound with a melting point of 50°C or higher is 40% by mass or less with respect to the total amount of the ink composition, but is preferably 35% by mass or less, more preferably 30% by mass or less, and even more preferably 25% by mass or less from the viewpoint of the tendency of further improving the clogging recoverability and the intermittent stability.

In the present specification, "water-soluble" means being miscible with water at any mixing ratio or having a solubility in water (25°C) of 1 g/100 g of water or more. The solubility in water (25°C) is preferably 3 g/100 g of water or more, and more preferably 5 g/100 g of water or more. "Water-insoluble" means not "water-soluble."

The water-soluble compound is not particularly limited, and examples thereof include components such as a moisturizer, a solubilizer, a surfactant, a resin, a chelating agent, and a pH adjuster that are water-soluble. The molecular weight of the water-soluble compound is not particularly limited, and is preferably 500 or less, more preferably 400 or less, even more preferably 300 or less, and particularly preferably 200 or less.

The water-soluble compound with a melting point of 50°C or higher preferably contains any one or more of a moisturizer and a solubilizer with a melting point of 50°C or higher and being water-soluble. When these compounds are contained, the image quality, and the clogging recoverability and the intermittent stability tend to be further improved.

Examples of the moisturizer with a melting point of 50°C or higher and being water-soluble include moisturizers with a melting point of 50°C or higher and being water-soluble among moisturizers described below, and examples thereof include urea (melting point: 132 to 135°C) and trimethylolpropane (melting point: 58°C). Examples of the solubilizer with a melting point of 50°C higher and being water-soluble include solubilizers with a melting point of 50°C or higher and being water-soluble among solubilizers described below, and examples thereof include ε-caprolactam (melting point: 68 to 71°C) and dimethyl sulfone (melting point: 107 to 109°C). In particular, when any one or more of urea and dimethyl sulfone is contained, the image quality, and the clogging recoverability and the intermittent stability tend to be further improved.

The content of any one or more of the moisturizer and the solubilizer with a melting point of 50°C or higher and being water-soluble is preferably the same as the above-described content of the water-soluble compound with a melting point of 50°C or higher.

The water-soluble compound with a melting point of 50°C or higher preferably contains any one or more of a moisturizer and a solubilizer with a melting point of 100°C or higher. Since the melting point of these compounds is a temperature equal to or higher than the standard boiling point of water, these compounds are even less likely to volatilize from the ink, and the clogging recoverability and the intermittent stability tend to be further improved.

The water-soluble compound with a melting point of 50°C or higher more preferably contains any one or more of a moisturizer and a solubilizer with a melting point of 125°C or higher. These compounds are much less likely to volatilize from the ink, and the clogging recoverability and the intermittent stability tend to be even further improved.

The content of any one or more of the moisturizer and the solubilizer with a melting point of 100°C or higher (more preferably 125°C or higher) and being water-soluble is preferably 1% by mass or more, more preferably 3% by mass or more, even more preferably 5% by mass or more, particularly preferably 10% by mass or more, and more particularly preferably 15% by mass or more with respect to the total amount of the ink composition. The upper limit of the content is not particularly limited, and is preferably 30% by mass or less, more preferably 25% by mass or less, and even more preferably 20% by mass or less with respect to the total amount of the ink composition.

### 1.4 Moisturizer

The ink jet ink composition according to the present embodiment may contain a moisturizer. The moisturizer has, for example, a function of inhibiting the volatilization of moisture in the ink. It is preferable that the moisturizer is water-soluble, and it is more preferable that it has a melting point of 50°C or higher and is water-soluble.

The content of the moisturizer is not particularly limited, and is preferably 5% by mass to 25% by mass, more preferably 8% by mass to 20% by mass, and even more preferably 10% by mass to 15% by mass with respect to the total amount of the ink composition.

Examples of the moisturizer include ureas, polyols, and glycol ethers. The moisturizer is preferably one or more selected from ureas, polyols, glycol ethers, and alkanediols, and more preferably one or more selected from ureas and polyols.

### 1.4.1 Ureas

Examples of ureas include urea, ethylene urea, tetramethyl urea, thiourea, and betaines (trimethylglycine, triethylglycine, tripropylglycine, triisopropylglycine, N,N,N-trimethylalanine, N,N,N-triethylalanine, N,N,N-triisopropylalanine, N,N,N-trimethylmethylalanine, carnitine, acetyl carnitine, and the like).

It is preferable that ureas are water-soluble, it is more preferable that they have a melting point of 50°C or higher and are water-soluble, and it is even more preferable that they have a melting point of 100°C or higher and are water-soluble.

The content of ureas is not particularly limited, and is preferably 1% by mass or more, more preferably 3% by mass or more, even more preferably 5% by mass or more, and particularly preferably 10% by mass or more with respect to the total amount of the ink composition. The upper limit of the content is not particularly limited, but is preferably 30% by mass or less, and more preferably 20% by mass or less with respect to the total amount of the ink composition.

### 1.4.2 Polyols

Polyols have two or more hydroxy groups in the molecule. It is preferable that polyols are water-soluble, and it is more preferable that they have a melting point of 50°C or higher and are water-soluble.

The content of polyols is not particularly limited, and is preferably 3% by mass to 20% by mass, more preferably 5% by mass to 18% by mass, even more preferably 7% by mass to 15% by mass, and particularly preferably 8% by mass to 12% by mass with respect to the total amount of the ink composition.

Examples of polyols include diols and triols and higher polyols.

Diols have two hydroxy groups in the molecule. Examples of diols include alkanediols and condensates of two or more molecules of alkanediols intermolecularly condensed between hydroxy groups (having two hydroxy groups in the molecule).

Examples of alkanediols include ethylene glycol (miscible with water), 1,2-propanediol (propylene glycol: PG) (completely miscible with water), 1,2-butanediol (miscible with water), 1,2-pentanediol (miscible with water), 1,2-hexanediol (1,2HD, completely miscible with water), 1,3-propanediol (completely miscible with water), 1,4-butanediol (completely miscible with water), 2,3-butanediol (miscible with water), 1,3-butylene glycol (completely miscible with water), 3-methyl-1,3-butanediol (completely miscible with water), 2-methyl-1,3-propanediol (completely miscible with water), 2,2-dimethyl-1,3-propanediol (solubility: 83 [g/100 g of water]), 2-methylpentane-2,4-diol (completely miscible with water), 2,5-dimethyl-2,5-hexanediol (solubility: 14 [g/100 g of water]), 1,5-pentanediol (miscible with water), 3-methyl-1,5-pentanediol (completely miscible with water), 1,6-hexanediol (miscible with water), 2,2-diethyl-1,3-propanediol (25°C property: solid, solubility: 10.0 [g/100 g of water]), 2-methyl-2-propyl-1,3-propanediol (melting point: 57°C, solubility: 7.5 [g/100 g of water]), 2-butyl-2-ethyl-1,3-propanediol (melting point: 41°C, solubility: 0.9 [g/100 g of water]), 2,2-diisobutyl-1,3-propanediol (melting point: 77°C, solubility: 0.5 [g/100 g of water]), 2,2-dibutyl-1,3-propanediol (solubility: 0.2 [g/100 g of water]), 2,2,4-trimethyl-1,3-pentanediol (melting point: 54°C, solubility: 1.9 [g/100 g of water]), 2-ethyl-1,3-hexanediol (melting point: -40°C, solubility: 4.2 [g/100 g of water]), 1,2-octanediol (melting point: 28°C, solubility: 0.3 [g/100 g of water]), 1,9-nonanediol (melting point: 46°C, solubility: 0.6 [g/100 g of water]), 1,2-decanediol (melting point: 49°C, solubility: 0.1 [g/100 g of water]), 2,4-diethyl-1,5-pentanediol (liquid (25°C), solubility: 1.0 [g/100 g of water]), 2,2,4,4-tetramethyl-1,3-cyclobutanediol (melting point: 126°C, solubility: 6.1 [g/100 g of water]), and 1,4-cyclohexanedimethanol (melting point: 35°C, solubility: 0.8 [g/100 g of water]).

Examples of the condensates of two or more molecules of alkanediols intermolecularly condensed between hydroxy groups include dialkylene glycols such as diethylene glycol (completely miscible with water) and dipropylene glycol (completely miscible with water); and trialkylene glycols such as triethylene glycol (completely miscible with water) and tripropylene glycol (completely miscible with water).

Triols and higher polyols have three or more hydroxy groups in the molecule. Examples thereof include compounds having three or more hydroxy groups and having an alkane or polyether structure as the skeleton. Examples of such compounds include glycerin (miscible with water), trimethylolethane (solubility: about 60 [g/100 g of water]), trimethylolpropane (completely miscible with water), and 1,2,6-hexanetriol (completely miscible with water).

### 1.4.3 Glycol Ethers

Glycol ethers are compounds with one or more hydroxy groups of glycols etherified. It is preferable that glycol ethers are water-soluble, and it is more preferable that they have a melting point of 50°C or higher and are water-soluble.

The content of glycol ethers is not particularly limited, and is preferably 3% by mass to 20% by mass, more preferably 5% by mass to 18% by mass, even more preferably 7% by mass to 15% by mass, and particularly preferably 8% by mass to 12% by mass with respect to the total amount of the ink composition.

Glycol ethers are preferably monoethers or diethers of alkylene glycols. The ether for the etherification is preferably an alkyl ether.

Examples of glycol ethers include, as alkylene glycol monoalkyl ethers, ethylene glycol monomethyl ether (completely miscible with water), ethylene glycol monoethyl ether (miscible with water), ethylene glycol monoisopropyl ether (solubility 100 [g/100 g of water]), ethylene glycol monopropyl ether (miscible with water), ethylene glycol monoisobutyl ether (solubility: 75.5 [g/100 g of water]), ethylene glycol mono-tert-butyl ether (miscible with water), ethylene glycol monobutyl ether (solubility: 100 [g/100 g of water]), diethylene glycol monomethyl ether (completely miscible with water), diethylene glycol monoethyl ether (completely miscible with water), diethylene glycol monoisopropyl ether (miscible with water), diethylene glycol monoisobutyl ether (completely miscible with water), diethylene glycol monobutyl ether (completely miscible with water), triethylene glycol monomethyl ether (completely miscible with water), triethylene glycol monoethyl ether (completely miscible with water), triethylene glycol monobutyl ether (miscible with water), tetraethylene glycol monomethyl ether (miscible with water), propylene glycol monomethyl ether (miscible with water), propylene glycol monoethyl ether (completely miscible with water), propylene glycol monopropyl ether (miscible with water), dipropylene glycol monomethyl ether (completely miscible with water), dipropylene glycol monopropyl ether (solubility: 19 [g/100 g of water]), tripropylene glycol monomethyl ether (completely miscible with water), 1,3-propanediol monomethyl ether (3-methoxy-1-propanol) (completely miscible with water), 1,3-butylene glycol-3-monomethyl ether (3-methoxy-1-butanol) (miscible with water), ethylene glycol monohexyl ether (melting point: -45°C, solubility: 1.0 [g/100 g of water]), ethylene glycol mono 2-ethylhexyl ether (melting point: -105°C, solubility: 0.1 [g/100 g of water]), diethylene glycol monohexyl ether (liquid (25°C), solubility: 1.7 [g/100 g of water]), diethylene glycol mono 2-ethylhexyl ether (melting point: -82°C, solubility: 0.5 [g/100 g of water], alternative name: 2-ethylhexyl diglycol), dipropylene glycol monobutyl ether (liquid (25°C), solubility: 4.0 [g/100 g of water]), and tripropylene glycol monobutyl ether (solubility: 4.0 [g/100 g of water]).

Examples of glycol ethers include, as alkylene glycol dialkyl ethers (glymes), ethylene glycol dimethyl ether (completely miscible with water), diethylene glycol dimethyl ether (completely miscible with water), diethylene glycol methyl ethyl ether (completely miscible with water), diethylene glycol diethyl ether (completely miscible with water), triethylene glycol dimethyl ether (completely miscible with water), tetraethylene glycol dimethyl ether (completely miscible with water), dipropylene glycol dimethyl ether (solubility: 52.6 [g/100 g of water]), tripropylene glycol dimethyl ether (solubility: 23.6 [g/100 g of water]), diethylene glycol butyl methyl ether (liquid (25°C)), and diethylene glycol dibutyl ether (melting point: -60°C, solubility: 0.3 [g/100 g of water])

### 1.5 Solubilizer

The ink jet ink composition according to the present embodiment may contain a solubilizer. The solubilizer has, for example, a function of promoting dissolution of one or more components in the ink in water. It is preferable that the solubilizer is water-soluble, and it is more preferable that it has a melting point of 50°C or higher and is water-soluble.

The content of the solubilizer is not particularly limited, and is preferably 3% by mass to 25% by mass, more preferably 5% by mass to 20% by mass, and even more preferably 7% by mass to 15% by mass with respect to the total amount of the ink composition.

Examples of the solubilizer include amides, a sulfur-containing solvent, and cyclic ethers. The solubilizer is preferably one or more selected from amides, a sulfur-containing solvent, and cyclic ethers, and more preferably one or more selected from amides and a sulfur-containing solvent.

### 1.5.1 Amides

Examples of amides include cyclic amides (lactams) such as 2-pyrrolidone (2P), 2-piperidone, ε-caprolactam (melting point: 68 to 71°C, solid (25°C)) N-methyl-ε-caprolactam, N-cyclohexyl-2-pyrrolidone, N-methylpyrrolidone, N-ethylpyrrolidone, N-butylpyrrolidone, 5-methyl-2-pyrrolidone, β-propiolactam, and ω-heptalactam; and chain amides such as N,N-dimethylacetoacetamide, N,N-diethylacetoacetamide, N-methylacetoacetamide, N,N-dimethylisobutyramide, N,N-dimethylformamide, N,N-diethylformamide, N,N-dimethylacetamide, N,N-diethylacetamide, N,N-dimethylpropionamide, 3-methoxy-N,N-dimethylpropanamide (DMPA), 3-n-butoxy-N,N-dimethylpropionamide, 3-methoxy-N,N-diethylpropionamide, 3-methoxy-N,N-methylethylpropionamide, 3-ethoxy-N,N-dimethylpropionamide, 3-ethoxy-N,N-diethylpropionamide, 3-ethoxy-N,N-methylethylpropionamide, 3-n-butoxy-N,N-diethylpropionamide, 3-n-butoxy-N,N-methylethylpropionamide, 3-n-propoxy-N,N-dimethylpropionamide, 3-n-propoxy-N,N-diethylpropionamide, 3-n-propoxy-N,N-methylethylpropionamide, 3-iso-propoxy-N,N-dimethylpropionamide, 3-iso-propoxy-N,N-diethylpropionamide, 3-iso-propoxy-N,N-methylethylpropionamide, 3-tert-butoxy-N,N-dimethylpropionamide, 3-tert-butoxy-N,N-diethylpropionamide, and 3-tert-butoxy-N,N-methylethylpropionamide.

It is preferable that amides are water-soluble, and it is more preferable that they have a melting point of 50°C or higher and are water-soluble.

The content of amides is not particularly limited, and is preferably 3% by mass to 20% by mass, more preferably 5% by mass to 18% by mass, even more preferably 7% by mass to 15% by mass, and particularly preferably 8% by mass to 12% by mass with respect to the total amount of the ink composition.

### 1.5.2 Sulfur-Containing Solvent

Examples of the sulfur-containing solvent include 3-methylsulfolane, sulfolane, ethyl isopropyl sulfone, ethyl methyl sulfone, dimethyl sulfone, dimethyl sulfoxide (DMSO), diethyl sulfoxide, tetramethylene sulfoxide, and methylphenyl sulfoxide.

It is preferable that the sulfur-containing solvent is water-soluble, it is more preferable that it has a melting point of 50°C or higher and is water-soluble, and it is even more preferable that it has a melting point of 100°C or higher and is water-soluble.

The content of the sulfur-containing solvent is not particularly limited, and is preferably 5% by mass or more, more preferably 7% by mass or more, and even more preferably 10% by mass or more with respect to the total amount of the ink composition. The upper limit of the content is not particularly limited, but is preferably 30% by mass or less, and more preferably 20% by mass or less with respect to the total amount of the ink composition.

### 1.5.3 Cyclic Ethers

Examples of cyclic ethers include isosorbide dimethyl ether, 3-methyl-3-oxetanemethanol, 3-ethyl-3-oxetanemethanol (DMHD), 2-hydroxymethyloxetane, tetrahydrofurfuryl alcohol, solketal, glycerol formal, 1,4-dioxane-2,3-diol, and dihydrolevoglucosenone.

It is preferable that cyclic ethers are water-soluble, and it is more preferable that they have a melting point of 50°C or higher and are water-soluble.

The content of cyclic ethers is not particularly limited, and is preferably 3% by mass to 20% by mass, more preferably 5% by mass to 18% by mass, even more preferably 7% by mass to 15% by mass, and particularly preferably 8% by mass to 12% by mass with respect to the total amount of the ink composition.

### 1.6 Surfactant

The ink jet ink composition according to the present embodiment may contain a surfactant. The surfactant is preferably water-soluble.

As the surfactant, for example, an acetylene glycol-based surfactant, a silicone-based surfactant, and a fluorine-based surfactant can be suitably used.

The acetylene glycol-based surfactant is not particularly limited, and examples thereof include Surfynol 104E, 104H, 104A, 104PA, 104S, and DF110D (all product names, manufactured by Air Products & Chemicals, Inc.), Olfine E1004, E1010, E1020, PD-001, PD-002W, PD-003, PD-004, EXP. 4001, EXP. 4036, and EXP. 4051 (all product names, manufactured by Nissin Chemical Industry Co., LTD.), and Acetylenol E00 and E200 (all product names, manufactured by Kawaken Fine Chemicals Co., Ltd.).

The silicone-based surfactant is not particularly limited, and examples thereof preferably include a polysiloxane-based compound. The polysiloxane-based compound is not particularly limited, and examples thereof include a polyether-modified organosiloxane. Examples of the commercially available product of the polyether-modified organosiloxane include KF-6004 (product name, manufactured by Shin-Etsu Chemical Co., Ltd.).

As the fluorine-based surfactant, a fluorine-modified polymer is preferably used, and specific examples thereof include Surflon S-242 (product name, manufactured by AGC Seimi Chemical Co., Ltd.) and Ftergent 245F (manufactured by Neos Company Limited).

The content of the surfactant is not particularly limited, and is preferably 3% by mass or less, more preferably 2% by mass or less, even more preferably 1% by mass or less, still even more preferably 0.5% by mass or less, particularly preferably 0.4% by mass or less, more particularly preferably 0.3% by mass or less, even more particularly preferably 0.2% by mass or less, and still even more particularly preferably 0.1% by mass or less with respect to the total amount of the ink composition. When the content of the surfactant is within the above range, the image quality tends to be further improved. The lower limit of the content of the surfactant is not particularly limited, and is preferably 0.01% by mass or more, more preferably 0.05% by mass or more, and even more preferably 0.1% by mass or more with respect to the total amount of the ink composition.

### 1.7 Chelating Agent

The ink jet ink composition according to the present embodiment may contain a chelating agent. It is preferable that the chelating agent is water-soluble, and it is more preferable that it has a melting point of 50°C or higher and is water-soluble.

Examples of the chelating agent include ethylenediaminetetraacetic acid (EDTA), N-(2-hydroxyethyl)ethylenediaminetriacetic acid, ethylenediamine succinic acid, iminodisulfosuccinic acid, dicarboxymethylglutamic acid, bis(2-aminoethyl)ethylene glycol tetraacetic acid, bis(2-aminophenyl)ethylene glycol tetraacetic acid, bis(2-hydroxyethyl)glycine, 1,2-diaminocyclohexanetetraacetic acid, diethylenetriaminepentaacetic acid, iminodiacetic acid, N-(2-hydroxyethyl)iminodiacetic acid, nitrilotriacetic acid, nitrilotrimethylphosphoric acid, triethylenetetraaminehexaacetic acid, tetrakis(2-pyridylmethyl)ethylenediamine, and salts thereof.

The content of the chelating agent is not particularly limited, and is preferably 0.001% by mass to 0.100% by mass, more preferably 0.003% by mass to 0.050% by mass, and even more preferably 0.005% by mass to 0.030% by mass with respect to the total amount of the ink composition.

### 1.8 pH Adjuster

The ink jet ink composition according to the present embodiment may contain a pH adjuster. It is preferable that the pH adjuster is water-soluble, and it is more preferable that it has a melting point of 50°C or higher and is water-soluble.

The pH adjuster is not particularly limited, and examples thereof include an appropriate combination of an acid, a base, a weak acid, and a weak base. Examples of the acid and the base for use in such a combination include, as inorganic acids, sulfuric acid. hydrochloric acid, and nitric acid; as inorganic bases, lithium hydroxide, sodium hydroxide, potassium hydroxide, potassium dihydrogen phosphate, disodium hydrogen phosphate, potassium carbonate, sodium carbonate, sodium bicarbonate, and ammonia; as organic bases, triethanolamine, diethanolamine, monoethanolamine, tripropanolamine, triisopropanolamine, diisopropanolamine, and trishydroxymethylaminomethane (THAM); and, as organic acids, adipic acid, citric acid, succinic acid, lactic acid, N,N-bis(2-hydroxyethyl)-2-aminoethanesulfonic acid (BES), 4-(2-hydroxyethyl)-1-piperazineethanesulfonic acid (HEPES), morpholinoethanesulfonic acid (MES), carbamoylmethyliminobisacetic acid (ADA), piperazine-1,4-bis(2-ethanesulfonic acid) (PIPES), N-(2-acetamido)-2-aminoethanesulfonic acid (ACES), cholamine hydrochloride, and N-tris(hydroxymethyl)methyl-2-aminoethanesulfonic acid (TES). Good buffers such as acetamidoglycine, tricine, glycinamide, and bicine, phosphate buffer solutions, citrate buffer solutions, Tris buffer solutions, and the like may also be used.

The content of the pH adjuster is not particularly limited, and is preferably 0.01% by mass to 3.0% by mass, more preferably 0.05% by mass to 2.0% by mass, and even more preferably 0.10% by mass to 1.0% by mass with respect to the total amount of the ink composition.

### 1.9 Resin

The ink jet ink composition according to the present embodiment may contain a resin. The resin has, for example, a function of improving the adhesion of the ink attached to a recording medium. The resin may be a water-soluble resin, but is preferably in the form of a water-insoluble emulsion (resin particles).

Examples of the resins include a urethane resin, a polyester resin, an acrylic resin, an olefin resin, a fluorene resin, a rosin-modified resin, a terpene resin, an amide resin, an epoxy resin, and a vinyl chloride resin. One kind of these may be used alone, or a plurality of kinds thereof may be used in combination.

The urethane resin is a general term for resins having a urethane bond. For the urethane resin, in addition to the urethane bond, a polyether type urethane resin including an ether bond in the main chain, an ester type urethane resin including an ester bond in the main chain, a carbonate type urethane resin including a carbonate bond in the main chain, and the like may be used.

The urethane resin may be a commercially available product, and examples thereof include Superflex 460, 460s, 840, and E-4000 (product names, manufactured by DKS Co., Ltd.); Resamine D-1060, D-2020, D-4080, D-4200, D-6300, and D-6455 (product names, manufactured by Dainichiseika Color & Chemicals Mfg. Co., Ltd.); Takelac WS-5100, WS-6021, W-512-A-6, and W-6110 (product names, manufactured by Mitsui Chemicals Polyurethanes, Inc.); Sancure 2710 (product name, manufactured by Lubrizol); and Permarin UA-150 (product name, manufactured by Sanyo Chemical Industries, Ltd.).

The polyester resin has a constitutional unit derived from a polyvalent carboxylic acid such as terephthalic acid, isophthalic acid, and orthophthalic acid, and a constitutional unit derived from a polyhydric alcohol such as ethylene glycol, 1,2-propylene glycol, and 1,3-propylene glycol, and is obtained by a known condensation reaction between the polyvalent carboxylic acid and the polyhydric alcohol.

The polyester resin may be a commercially available product. Examples of the commercially available product of the polyester resin include Elitel (registered trademark) KA-5034, KA-50715, KA-1449, KA-0134, KA-3556, KA-6137, KZA-6034, KT-8803, KT-8701, KT-9204, KT-8904, KT-0507, and KT-9511 (all product names) of Unitika Ltd.; Plas Coat (registered trademark) Z-221, Z-446, Z-561, Z-565, RZ-570, Z-592, Z-687, Z-690, Z-730, Z-760, Z-880, RZ-105, RZ-570, and RZ-760 (all product names) of Goo chemical Co., Ltd.; and Vylonal (registered trademark) MD-1200, MD-1500, and MD-2000 (all product names) of Toyobo Co., Ltd.

The acrylic resin is a general term for polymers obtained by polymerizing at least an acrylic monomer such as (meth)acrylic acid and a (meth)acrylate as one component, and examples thereof include a resin obtained from an acrylic monomer, and a copolymer of an acrylic monomer and a monomer other than the acrylic monomer. Examples thereof also include an acrylic-vinyl resin that is a copolymer of an acrylic monomer and a vinyl monomer. In addition, examples of the vinyl monomer include styrene. As the acrylic monomer, acrylamide, acrylonitrile, and the like can also be used.

A commercially available product of a resin emulsion using the acrylic resin as a raw material may be used, and for example, a product selected from FK-854 (product name, manufactured by Chuo Rika Kogyo Corporation), Mowinyl 952B, 718A, and 6750 (product names, manufactured by The Nippon Synthetic Chemical Industry Co., Ltd.), and Nipol LX852 and LX874 (product names, manufactured by Zeon Corporation) may be used.

In the present specification, the acrylic resin may be a styrene-acrylic resin described later. In addition, in the present specification, the notation of "(meth)acrylic" means acrylic or methacrylic.

The styrene-acrylic resin is a copolymer obtained from a styrene monomer and a (meth)acrylic monomer, and examples thereof include a styrene-acrylic acid copolymer, a styrene-methacrylic acid copolymer, a styrene-methacrylic acid-acrylate copolymer, a styrene-α-methylstyrene-acrylic acid copolymer, and a styrene-α-methylstyrene-acrylic acid-acrylate copolymer. A commercially available product of the styrene-acrylic resin may be used, and for example, Joncryl 62J, 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (product names, manufactured by BASF), Mowinyl 966A and 975N (product names, manufactured by The Nippon Synthetic Chemical Industry Co., Ltd.), Vinyblan 2586 (manufactured by Nissin Chemical Co., Ltd.), and the like may be used.

The olefin resin is a polymer having, in a structural skeleton, olefins such as ethylene, propylene, and butylene, and known olefin resins can be appropriately selected for use. As the olefin resin, a commercially available product can be used. For example, Arrowbase CB-1200 and CD-1200 (product names, manufactured by Unitika Ltd.), and the like may be used.

The fluorene resin is a general term for resins having a fluorene skeleton. Examples of the fluorene resin include a fluorene-based polyester resin, a fluorene-based polyurethane resin, a fluorene-based polyimide resin, a fluorene-based polycarbonate resin, a fluorene-based acrylic resin, and a fluorene-based epoxy resin.

The rosin-modified resin is a general term for resins derived from rosin. Examples of the rosin-modified resin include a rosin-modified phenol resin, a maleic acid-modified rosin resin, and a rosin ester.

The terpene resin refers to a resin obtained by cationically polymerizing a monomer containing, for example, α-pinene, β-pinene, dipentene, or the like as a main component with isoprene (C₅H₈) as a basic unit.

The amide resin is a resin in which a main chain is formed by repeating an amide bond. The amide resin is not particularly limited, and examples thereof include nylon 6, nylon 11, nylon 12, nylon 66, nylon 610, nylon 6T, nylon 6I, nylon 6T, nylon M5T, and nylon 612.

The epoxy resin refers to a resin having a reactive epoxy group, and examples thereof include bisphenol type epoxy such as bisphenol A type and bisphenol F type, novolac type epoxy such as phenol novolac type and cresol novolac type, epoxy polyol type epoxy, urethane-modified epoxy, chelate-modified epoxy, and rubber-modified epoxy.

The vinyl chloride resin is not particularly limited, and examples thereof include copolymer resins of vinyl chloride and one or two or more selected from the group consisting of vinyl acetate, vinylidene chloride, acryl, maleic acid, and vinyl alcohol.

The content of the resin is not particularly limited, and is preferably 10% by mass or less, more preferably 7% by mass or less, even more preferably 5% by mass or less, particularly preferably 3% by mass or less, and more particularly preferably 1% by mass or less with respect to the total amount of the ink composition, and the lower limit is 0% by mass (not contained). 1.10 Other Components

The ink jet ink composition according to the present embodiment may contain various additives such as waxes, rust inhibitors, antifungal agents, antioxidants, anti-reducing agents, and evaporation accelerators, if necessary, in addition to the above components.

The content of the other components is not particularly limited, and is preferably 0.1% by mass to 5% by mass, more preferably 0.1% by mass to 3% by mass, even more preferably 0.1% by mass to 1% by mass, and particularly preferably 0.3% by mass to 1% by mass with respect to the total amount of the ink composition.

### 1.11 Compound with Melting Point of lower than 50°C

It is preferable that the ink jet ink composition according to the present embodiment does not contain a compound with a melting point of lower than 50°C (excluding water) among the above-described components. When such a compound is not contained, the solvent in the ink is even less likely to volatilize, and the clogging recoverability and the intermittent stability tend to be more excellent. The melting point of the compound is preferably 30°C or lower, more preferably 0°C or lower, and even more preferably -20°C or lower. Examples of the compound with a melting point of lower than 50°C (excluding water) include those with a melting point of lower than 50°C among the above-described moisturizer and solubilizer, and examples thereof include the moisturizer with a melting point of lower than 50°C, such as propylene glycol.

From the same viewpoint, even when the compound with a melting point of lower than 50°C (excluding water) is contained, the content thereof is preferably 30% by mass or less, more preferably 20% by mass or less, even more preferably 15% by mass or less, particularly preferably 10% by mass or less, and more particularly preferably 5% by mass or less with respect to the total amount of the ink composition.

From the same viewpoint, even when the compound with a melting point of lower than 50°C (excluding water) is contained, the content thereof is preferably 50% by mass or less, more preferably 40% by mass or less, even more preferably 30% by mass or less, particularly preferably 20% by mass or less, and more particularly preferably 10% by mass or less with respect to the total amount of the ink composition (excluding water).

### 1.12 Water-Insoluble Substance

In the ink jet ink composition according to the present embodiment, among the above-described components, the content of a water-insoluble substance is preferably 10% by mass or less, more preferably 7% by mass or less, even more preferably 5% by mass or less, particularly preferably 3% by mass or less, and more particularly preferably 1% by mass or less with respect to the total amount of the ink composition, and the lower limit is 0% by mass (not included). When the content of the water-insoluble substance is within the above range, the clogging recoverability and the intermittent stability tend to be more excellent. Examples of the water-insoluble substance include a water-insoluble resin (resin particles).

### 1.13 Ink Physical Properties, etc.

The surface tension of the ink jet ink composition according to the present embodiment is preferably 55 mN/m or less, more preferably 48 mN/m or less, even more preferably 45 mN/m or less, particularly preferably 40 mN/m or less, and more particularly preferably 35 mN/m or less. When the surface tension is within the above range, especially 45 mN/m or less, the permeability of the ink is further improved, and the image quality tends to be more excellent. The surface tension can be measured using an automatic surface tension meter CBVP-Z (Kyowa Interface Science Co., Ltd.), for example, by a method of immersing a part of a platinum plate in the ink in an environment of 20°C.

The viscosity of the ink jet ink composition according to the present embodiment is preferably 6.0 mPa·s or less, more preferably 5.5 mPa·s or less, even more preferably 5.0 mPa·s or less, and particularly preferably 4.5 mPa·s or less. When the viscosity is within the above range, the clogging recoverability and the intermittent stability tend to be more excellent. The viscosity can be measured using, for example, a viscoelasticity tester MCR-300 (Physica). Specifically, the viscosity is measured by adjusting the temperature of the ink to 20°C, raising the Shear Rate from 10 to 1,000, and reading the viscosity when the Shear Rate is 200.

The ink jet ink composition according to the present embodiment is preferably a freeze-dried ink or a spray-dried ink. In the presence of water, the hydrolysis of the reactive dye proceeds, and the reactive group of the reactive dye is easily inactivated. Therefore, the reactive dye can be inhibited from being deactivated by preventing the reactive dye from coming into contact with water during transportation or storage as a freeze-dried ink or a spray-dried ink. Furthermore, when the ink is a freeze-dried ink or a spray-dried ink, there is also an advantage that the volume during transportation or storage can be reduced.

The freeze-dried ink or the spray-dried ink refers to an ink obtained by freeze drying or spray drying the produced ink jet ink composition to remove at least part of a liquid medium, adding a liquid medium corresponding to the removed amount, and returning the ink to the state of the ink jet ink composition again. Methods of freeze drying and spray drying will be described below.

The ink jet ink composition according to the present embodiment is preferably used for textile printing. Since the water-soluble compound with a melting point of 50°C or higher contained in the ink jet ink composition according to the present embodiment tends to be even less likely to volatilize when the recording medium is a fabric, the surface tension further decreases as water preferentially volatilizes after the ink droplet lands on a permeable medium such as a fabric, and as a result, the permeability of the ink is further increased, and better image quality can be obtained.

### 2. Ink Jet Ink Composition (II)

The ink jet ink composition according to an embodiment of the present disclosure is an ink jet ink composition containing an ink composition A containing a reactive dye and a water-soluble compound with a melting point of 50°C or higher, and with a content of a substance that is liquid in a 25°C, 1 atm environment of 20% by mass or less with respect to the total amount of the ink composition A, and an aqueous solution B containing water in an amount of 50% by mass or more with respect to the total amount of the aqueous solution B, wherein the content of the water-soluble compound with a melting point of 50°C or higher is 10% by mass or more and 40% by mass or less with respect to the total amount of the ink jet ink composition.

The ink jet ink composition according to the present embodiment can improve both the image quality and the clogging recoverability by containing the water-soluble compound with a melting point of 50°C or higher in a specific amount.

The water-soluble compound with a melting point of 50°C or higher tends to have a melting point higher than the environmental temperature near the nozzle, and is thus relatively less likely to volatilize, and can improve the clogging recoverability and the intermittent stability. In addition, since the water-soluble compound with a melting point of 50°C or higher is less likely to volatilize, the surface tension decreases as water preferentially volatilizes after the water-based ink droplet lands on a permeable medium such as cloth, and as a result, the permeability of the ink is high, and good image quality can be obtained.

In the ink jet ink composition according to the present embodiment, the content of the water-soluble compound with a melting point of 50°C or higher is 10% by mass or more and 40% by mass or less with respect to the total amount of the ink jet ink composition, and can be the same as the configuration of the above-described ink jet ink composition (I).

### 2.1 Ink Composition A

The ink jet ink composition according to the present embodiment contains an ink composition A. The ink composition A contains a reactive dye and a water-soluble compound with a melting point of 50°C or higher, and the content of a substance that is liquid in a 25°C, 1 atm environment is 20% by mass or less with respect to the total amount of the ink composition A.

### 2.1.1 Reactive Dye

The ink composition A contains a reactive dye. The reactive dye is as described in the above-describe ink jet ink composition (I).

The content of the reactive dye is not particularly limited, and is preferably 95% by mass or less, more preferably 90% by mass or less, and even more preferably 85% by mass or less with respect to the total amount of the ink composition A. When the content of the reactive dye is within the above range, the resolubility/redispersibility when it is formulated into an ink jet ink composition tends to be more excellent.

The lower limit of the content of the reactive dye is not particularly limited, and is preferably 5% by mass or more, more preferably 10% by mass or more, even more preferably 15% by mass or more, and particularly preferably 20% by mass or more with respect to the total amount of the ink composition A.

### 2.1.2 Water-Soluble Compound with Melting Point of 50°C or higher

The ink composition A contains a water-soluble compound with a melting point of 50°C or higher. The water-soluble compound with a melting point of 50°C is as described in the above-described ink jet ink composition (I).

The content of the water-soluble compound with a melting point of 50°C or higher is not particularly limited, and is preferably 80% by mass or less, more preferably 75% by mass or less, and even more preferably 70% by mass or less with respect to the total amount of the ink composition A. When the content of the water-soluble compound with a melting point of 50°C or higher is within the above range, the resolubility/redispersibility when it is formulated into an ink jet ink composition tends to be more excellent.

The lower limit of the content of the water-soluble compound with a melting point of 50°C or higher is not particularly limited, and is preferably 5% by mass or more, more preferably 10% by mass or more, and even more preferably 15% by mass or more with respect to the total amount of the ink composition A.

### 2.1.3 Other Components

The ink composition A may contain each component contained in the above-described ink jet ink composition (I). That is, the ink composition A may contain a moisturizer, a solubilizer, a surfactant, a resin, a chelating agent, a pH adjuster, a resin, and other various additives. These components are as described in the above-described ink jet ink composition (I).

The content of the moisturizer is not particularly limited, and is preferably 5% by mass to 60% by mass, more preferably 10% by mass to 50% by mass, and even more preferably 15% by mass to 40% by mass with respect to the total amount of the ink composition A.

The content of the solubilizer particularly limited, and is preferably 5% by mass to 50% by mass, more preferably 15% by mass to 40% by mass, and even more preferably 20% by mass to 35% by mass with respect to the total amount of the ink composition A.

The content of the surfactant is not particularly limited, and is preferably 0.1% by mass to 5% by mass, more preferably 0.3% by mass to 3% by mass, and even more preferably 0.5% by mass to 2% by mass with respect to the total amount of the ink composition A.

The content of the chelating agent is not particularly limited, and is preferably 0.01% by mass to 0.10% by mass, more preferably 0.02% by mass to 0.08% by mass, and even more preferably 0.03% by mass to 0.06% by mass with respect to the total amount of the ink composition A.

The content of the pH adjuster is not particularly limited, and is preferably 0.1% by mass to 5% by mass, more preferably 0.3% by mass to 3% by mass, and even more preferably 0.5% by mass to 2% by mass with respect to the total amount of the ink composition A.

### 2.1.4 Liquid Substance

In the ink composition A, the content of a substance that is liquid in a 25°C, 1 atm environment (hereinafter, also referred to as "liquid substance") is 20% by mass or less with respect to the total amount of the ink composition A. When the content of the liquid substance is 20% by mass or less with respect to the total amount of the ink composition A, the storability of the ink composition A can be improved. In addition, since the hydrolysis reaction of the reactive dye can be reduced, good image quality can be obtained.

The content of the liquid substance is 20% by mass or less with respect to the total amount of the ink composition A, but is preferably 15% by mass or less, more preferably 10% by mass or less, even more preferably 5% by mass or less, particularly preferably 3% by mass or less, more particularly preferably 1% by mass or less, and even more particularly preferably 0.5% by mass or less, and the liquid substance is still even more particularly preferably not contained (0% by mass).

Examples of the liquid substance include water.

### 2.1.5 Water-Insoluble Substance

In the ink composition A, the content of a water-insoluble substance is preferably 5% by mass or less, more preferably 3% by mass or less, even more preferably 1% by mass or less, and particularly preferably 0.1% by mass or less with respect to the total amount of the ink composition A, and the water-insoluble substance is more particularly preferably not contained (0% by mass). When the content of the water-insoluble substance is within the above range, the intermittent printing stability tends to be further improved.

### 2.2 Aqueous Solution B

The ink jet ink composition according to the present embodiment contains an aqueous solution B containing water in an amount of 50% by mass or more with respect to the total amount of the aqueous solution B.

### 2.2.1 Water

The aqueous solution B contains water. The water is as described in the above-described ink jet ink composition (I).

The content of water is 50% by mass or more with respect to the total amount of the aqueous solution B, but is more preferably 60% by mass or more, even more preferably 70% by mass or more, still even more preferably 80% by mass or more, particularly preferably 90% by mass or more, more particularly preferably 95% by mass or more, and even more particularly preferably 100% by mass. In particular, when the aqueous solution B contains water in an amount of 60% by mass or more with respect to the total amount of the aqueous solution B, the intermittent printing stability tends to be further improved.

### 2.2.2 Other Components

The aqueous solution B may contain a water-soluble compound other than the reactive dye among the components contained in the above-described ink jet ink composition (I). It is preferable that the water-soluble compound other than the reactive dye is a water-soluble compound with a melting point of 50°C or higher, and it is more preferable that it is any one or more of a moisturizer and a solubilizer having a melting point of 50°C or higher and being water-soluble.

The content of the water-soluble compound other than the reactive dye is not particularly limited, and is preferably 40% by mass or less, more preferably 30% by mass or less, and even more preferably 20% by mass or less with respect to the total amount of the aqueous solution B.

### 2.3 Method for Producing Ink

The ink jet ink composition according to the present embodiment can be obtained by a method for producing an ink jet ink composition described below.

### 3. Method for Producing Ink Jet Ink Composition

The method for producing an ink jet ink composition according to an embodiment of the present disclosure is a method for producing an ink jet ink composition, the method including a mixing step of mixing an ink composition A containing a reactive dye and a water-soluble compound with a melting point of 50°C or higher, and an aqueous solution B containing water in an amount of 50% by mass or more with respect to the total amount of the aqueous solution B, wherein the content of the water-soluble compound with a melting point of 50°C or higher is 10% by mass or more and 40% by mass or less with respect to the total amount of the ink jet ink composition.

The ink jet ink composition obtained by the production method according to the present embodiment can improve both the image quality and the clogging recoverability by containing the water-soluble compound with a melting point of 50°C or higher in a specific amount.

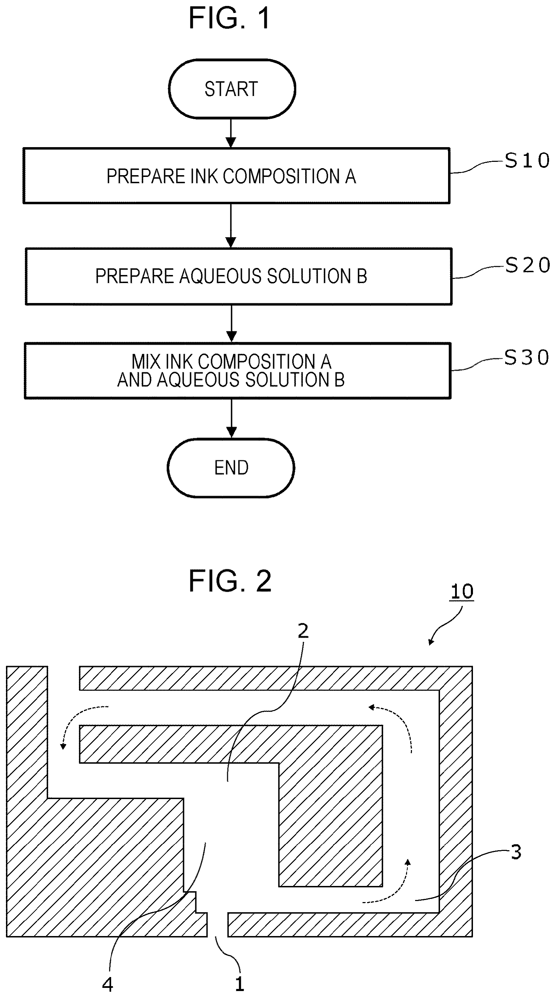

FIG. 1 is a flowchart of the method for producing an ink jet ink composition according to an embodiment. As shown in FIG. 1, the method for producing an ink jet ink composition according to the present embodiment includes a mixing step (S30) of mixing the ink composition A and the aqueous solution B. In the present embodiment, an example in which a step (S10) of preparing the ink composition A and a step (S20) of preparing the aqueous solution B are further included before S30 will be described.

### 3.1 Step (S10) of Preparing Ink Composition A

The method for producing an ink jet ink composition according to the present embodiment may include a step of preparing the ink composition A containing a reactive dye and a water-soluble compound with a melting point of 50°C or higher.

Since the ink composition A is as described above, the description thereof will be omitted.

The method for preparing the ink composition A is not particularly limited, and may be a method of mixing the above-described components in any order, a method of mixing the above-described components with a liquid medium such as water and then removing at least part of the liquid medium, or the like. A preferable method for preparing the ink composition A is a method of freeze drying or spray drying the above-described ink jet ink composition (I).

In the case of freeze drying or spray drying, the surface area of the substance after drying is increased as compared with the case of natural drying or the like, and thus, the resolubility/redispersibility tends to be more excellent. In addition, since no heat is applied in freeze drying and a heating time is extremely short even in spray drying, heat damage to the ink composition A can be reduced.

Freeze drying can be performed using a known freeze-drying device. As the freeze-drying device, for example, "FD-1000" manufactured by Tokyo Rikakikai Co., Ltd. or the like can be used.

In freeze drying, it is preferable to include a preliminary freezing step and a freeze-drying step.

The preliminary freezing step is a step of cooling a sample with a low-temperature liquid. The temperature in the preliminary freezing step is not particularly limited, and is preferably from -70°C to -200°C. Examples of the low-temperature liquid used in the preliminary freezing step include liquid nitrogen, liquid ethanol, and liquid acetone.

The freeze-drying step is a step of vaporizing the liquid medium in the sample to freeze dry the sample by reducing the pressure of the sample and leaving the sample to stand for a predetermined time. The temperature during the freeze-drying step is not particularly limited, and is preferably set to be lower than a collapse temperature of the sample to be freeze dried, and is preferably -80°C or higher. The pressure at the time of reduction of the pressure is not particularly limited, and is preferably 100 mmHg or less, and most preferably 20 mmHg or less. The time of the freeze-drying step is not particularly limited, and is preferably 2 to 24 hours, and most preferably about 10 hours.

Spray drying can be performed using a known spray-drying device. As the spray-drying device, for example, "ADL311S-A" manufactured by Yamato Scientific Co., Ltd. or the like can be used.

As a drying temperature in spray drying, an inlet temperature is preferably 150°C to 220°C and an outlet temperature is preferably 30°C to 60°C, and the inlet temperature is more preferably 180°C to 220°C and the outlet temperature is more preferably 50°C to 60°C.

The prepared ink composition A is preferably stored in a container made of a material of which the water vapor permeability in an environment of a temperature of 20°C and a humidity of 90%RH, measured in accordance with JIS K 7129, is 5 g/m²/day or less. In this case, the storability tends to be further improved, and the deactivation of the reactive dye tends to be reduced.

The water vapor permeability in an environment of a temperature of 20°C and a humidity of 90%RH, measured in accordance with JIS K 7129, is preferably 3 g/m²/day or less, and more preferably 2 g/m²/day or less.

As the material of which the water vapor permeability in an environment of a temperature of 20°C and a humidity of 90%RH, measured in accordance with JIS K 7129, is 5 g/m²/day or less, for example, a laminate obtained by laminating a resin layer such as polyethylene terephthalate or polypropylene and a barrier layer such as an aluminum foil or an aluminum vapor deposition film is preferable.

The container preferably includes at least one or more of a mechanism for mixing and stirring the ink composition A and the aqueous solution B and a mechanism for heating the ink composition A and the aqueous solution B that have been mixed. As a result, the mixing step described later can be effectively performed, and the resolubility/redispersibility tends to be further improved.

At least one aspect of the mechanism for mixing and stirring will be described. The mechanism for mixing and stirring is provided below the container, preferably on a bottom surface of the container. The mechanism for mixing and stirring preferably includes a rotating blade, a rotating shaft, and a motor. The rotating blade is supported by the rotating shaft rotated by the motor, and the rotating blade is rotated by driving the motor.

At least one aspect of the mechanism for heating will be described. The mechanism for heating may be a heater that is in contact with the ink composition A and the aqueous solution B to directly heat them, or a heater that is attached to the outside of the container to heat the container, thereby indirectly heating the ink composition A and the aqueous solution B. The temperature of the heater is not particularly limited, and is, for example, preferably 30°C to 80°C, and more preferably 30°C to 60°C.

The capacity of the container is preferably 20 L or less, and more preferably 10 L or less. When the capacity of the container is within the above range, the mixing step described below can be effectively performed, and the resolubility/redispersibility tends to be further improved.

### 3.2 Step (S20) of Preparing Aqueous Solution B

The method for producing an ink jet ink composition according to the present embodiment may include a step of preparing the aqueous solution B containing water in an amount of 50% by mass or more with respect to the total amount of the aqueous solution B.

Since the aqueous solution B is as described above, the description thereof will be omitted.

The order of the present step is not particularly limited, and the step may be performed before, after, or simultaneously with S10.

The method for preparing the aqueous solution B is not particularly limited, and the aqueous solution B is obtained by mixing the above-mentioned components in any order and removing impurities by filtration or the like as needed. As a method for mixing each component, a method in which materials are sequentially added to a container equipped with a stirring device such as a mechanical stirrer or a magnetic stirrer, and stirred and mixed is suitably used. As a filtration method, centrifugal filtration, filter filtration, or the like can be performed as needed.

### 3.3 Mixing Step (S30)

The method for producing an ink jet ink composition according to the present embodiment includes a mixing step of mixing an ink composition A containing a reactive dye and a water-soluble compound with a melting point of 50°C or higher, and an aqueous solution B containing water in an amount of 50% by mass or more with respect to the total amount of the aqueous solution B. As a result, the environmental load due to transportation and the storage space can be minimized.

The ink composition A and the aqueous solution B are as described above. The ink jet ink composition obtained by the present step is the ink jet ink composition (I) or the ink jet ink composition (II) described above.

The mixing step may be performed when an ink jet printer is used. That is, the mixing step may be performed immediately before the use of the ink jet printer or during the use of the ink jet printer.

Immediately before the use of the ink jet printer means that it is performed, for example, at least 1 week before, at least 3 days before, at least 1 day before, at least 12 hours before, at least 6 hours before, at least 3 hours before, at least 1 hour before, at least 30 minutes before, at least 15 minutes before, or at least 5 minutes before the use of the ink jet printer.

The mixing step may be performed inside the ink jet printer or performed inside a container separated from the ink jet printer. The mixing step may be performed at a location within 100 m, within 50 m, within 25 m, within 10 m, within 5 m, or within 1 m of the ink jet printer.

The mixing step may not be performed in association with the use of the ink jet printer. That is, the time from the completion of the mixing step to the use in the ink jet printer is not particularly limited, and the distance between the location where the mixing step is performed and the ink jet printer to be used is not particularly limited, either.

The method of mixing the ink composition A and the aqueous solution B is not particularly limited, and may be, for example, a method of adding the ink composition A and the aqueous solution B to a container equipped with a stirring device and stirring and mixing them.

The ratio of mixing the ink composition A and the aqueous solution B can be adjusted as appropriate in accordance with the purpose, but for example, the mass ratio of the ink composition A to the aqueous solution B (ink composition A/aqueous solution B) is preferably 0.05 to 1.5, more preferably 0.07 to 1.0, even more preferably 0.1 to 0.7, and particularly preferably 0.15 to 0.6.

### 4. Recording Method

The recording method according to an embodiment of the present disclosure includes an ejecting step of ejecting the above-described ink jet ink composition onto a fabric from an ink jet head.

The recording method according to the present embodiment uses the above-described ink jet ink composition, and can improve both the image quality and the clogging recoverability. 4.1 Ejecting Step

The recording method according to the present embodiment includes an ejecting step of ejecting the above-described ink jet ink composition onto a fabric from an ink jet head.

Since the ink jet ink composition is as described in the ink jet ink composition (I) or the ink jet ink composition (II) described above, the description thereof will be omitted.

The application amount of the ink jet ink composition per unit area for the fabric is preferably 10 to 40 g/m², more preferably 15 to 35 g/m², and even more preferably 20 to 30 g/m².

Examples of the material of the fabric include natural fibers such as cotton, hemp (linen), wool, and silk; regenerated fibers such as rayon; synthetic fibers such as polypropylene, polyester, acetate, triacetate, polyamide, and polyurethane; and biodegradable fibers such as polylactic acid, and mixed fibers thereof may be used.

Among these, the fabric preferably contains any one or more of cotton, silk, linen, and rayon from the viewpoint that the effects of the present disclosure can be further enjoyed. Since these materials have many hydrophilic groups such as hydroxy groups, they easily swell by the water-based ink. When the fabric swells, gaps in the fabric are filled, and thus the ink tends to be less likely to permeate. In contrast, with the recording method according to the present embodiment, since the above-described ink jet ink composition in which water is likely to preferentially volatilize after landing on the fabric is used, the permeability of the ink is good, and excellent image quality tends be obtained even in the fabric.

Examples of the form of the fabric include cloth, clothes, and other accessories. The cloth includes a woven fabric, a knitted fabric, and a nonwoven fabric. Clothes and other accessories include a T-shirt, a handkerchief, a scarf, a towel, a carrier bag, a cloth bag, and furniture items such as a curtain, a sheet, a bedspread, and wallpaper after sewing as well as cloth before and after cutting as a component before sewing. Examples of these forms include a long roll-shaped form, a form cut in a predetermined size, and a form having a shape of a product.

### 4.2 Drying Step

The recording method according to the present embodiment may include a drying step of drying the fabric to which the above-described ink jet ink composition is attached. By including such a drying step, the rubbing fastness tends to be further improved.

The drying method in the drying step is not particularly limited, and examples thereof include a heat press, a belt conveyor oven, an atmospheric pressure steam method, a highpressure steam method, a thermofix method, and blowing. The heat source for drying is not particularly limited, and, for example, an infrared lamp or the like can be used.

The drying temperature is not particularly limited, and may be 100°C or higher and 250°C or lower, 120°C or higher and 230°C or lower, 150°C or higher and 200°C or lower, or 160°C or higher and 180°C or lower. Here, the drying temperature in the drying step refer to the surface temperature of an image or the like formed on the fabric.

The time for drying is not particularly limited, and is, for example, preferably 10 seconds or more and 10 minutes or less, more preferably 20 seconds or more and 5 minutes or less, and even more preferably 60 seconds or more and 3 minutes or less.

The drying step may be performed while applying pressure using a heat press or the like. The pressure to be applied is not particularly limited, and is preferably 1 to 10 N/cm², more preferably 1 to 8 N/cm², and even more preferably 1 to 5 N/cm².

### 4.3 Other Steps

The recording method according to the present embodiment may include a step of rinsing with water the fabric on which recording is performed, a step of performing heating and drying again, and the like. In rinsing with water, components such as the ink not fixed on the fabric may be washed away using a hot soap liquid or the like as soaping treatment as needed. 4.4 Ink Jet Printer

An example of an ink jet printer suitable for the recording method according to the present embodiment will be described.

The ink jet printer preferably includes an ink jet head including a nozzle for ejecting the ink jet ink composition, a pressure chamber to which the ink jet ink composition is supplied, and a circulation flow path that allows the ink jet ink composition in the pressure chamber to be circulated. As a result, the intermittent printing stability tends to be further improved.

As shown in FIG. 2, an ink jet head 10 includes a nozzle 1, a pressure chamber 2 to which the ink jet ink composition is supplied, and a circulation flow path 3 that allows the ink jet ink composition in the pressure chamber 2 to be circulated. In the example of FIG. 2, the nozzle 1 and the pressure chamber 2 communicate with each other through a communication path 4.

The nozzle 1 is a through-hole for ejecting the ink jet ink composition. More specifically, the nozzle 1 is a through-hole formed in a nozzle plate. A plurality of nozzles are formed in the nozzle plate, and the pressure chamber 2 is provided for each of the nozzles. The pressure chamber 2 is individually formed for each nozzle 1. The ink jet ink composition is supplied to the pressure chamber 2. When a pressure in the pressure chamber 2 fluctuates due to a pressure generating unit (not illustrated), a part of the ink jet ink composition flowing in the communication path 4 is ejected from the nozzle 1 to the outside, and a remaining part flows into the circulation flow path 3. The route of the circulation flow path 3 is not particularly limited, and the flow path can be configured such that the ink jet ink composition flowing into the circulation flow path 3 is supplied to the pressure chamber 2. The ink jet ink composition flowing into the circulation flow path 3 does not necessarily have to be resupplied to the same pressure chamber again, and may be supplied to a pressure chamber corresponding to another nozzle. In addition, it is not necessary that all the flow paths of the circulation flow path 3 are inside the ink jet head 10, and some of the flow paths may be outside the ink jet head 10 as long as the flow paths are configured such that the ink jet ink composition flowing out from the pressure chamber 2 is supplied to the pressure chamber 2 again.

Thus, the ink jet head 10 of the present embodiment can efficiently circulate the ink jet ink composition in the pressure chamber 2, more specifically, the ink jet ink composition in the vicinity of the nozzle 1 inside the head. As a result, the intermittent printing stability tends to be further improved.

Examples of the ink jet head 10 include a line head that performs recording by a line method and a serial head that performs recording by a serial method.

In the line method using the line head, for example, an ink jet head having a width equal to or larger than a recording width of a recording medium is fixed to the ink jet printer. Then, the recording medium is moved along a sub-scanning direction (the vertical direction of the recording medium or a transport direction), ink droplets are ejected from the nozzles of the ink jet head in conjunction with the movement, whereby an image is recorded on the recording medium.

In the serial method using the serial head, for example, an ink jet head is mounted on a carriage that can move in the width direction of the recording medium. Then, the carriage is moved along a main scanning direction (the lateral direction of the recording medium or a width direction), and ink droplets are ejected from nozzle openings of the head in conjunction with the movement, whereby an image can be recorded on the recording medium.

The ink jet head 10 may include a heating section that can heat the ink jet ink composition. More specifically, a heating section may be included that heats the ink jet ink composition in the circulation flow path configured by the pressure chamber 2, the circulation flow path 3, and the communication path 4. The heating unit is not particularly limited, and can be provided, for example, in the pressure chamber 2, the circulation flow path 3, or the communication path 4. In addition, a heating unit that heats the nozzle plate may be provided, and when the circulation flow path 3 passes through the outside of the ink jet head 10, a heating unit may be provided in the circulation flow path 3 existing outside the ink jet head 10. Furthermore, a heating unit may be provided in an ink flow path upstream of the pressure chamber. Here, the ink flow path refers to a flow path for circulating the ink. The ink flow path includes, for example, an ink supply path for supplying the ink from an ink accommodating container that stores the ink to the ink jet head.

The lower limit of the heating temperature of the ink jet ink composition is preferably 35°C or higher, more preferably 40°C or higher, and even more preferably 45°C or higher. In addition, as the upper limit, the heating temperature of the composition is preferably 70°C or lower, more preferably 60°C or lower, and even more preferably 50°C or lower.

The ink jet printer preferably includes at least one or more of a mechanism for mixing and stirring the ink composition A and the aqueous solution B and a mechanism for heating the ink composition A and the aqueous solution B that have been mixed. As a result, the above-described mixing step can be effectively performed, and the resolubility/redispersibility tends to be further improved.

At least one aspect of the mechanism for mixing and stirring will be described. The mechanism for mixing and stirring is preferably provided below the ink accommodating container of the ink jet printer, preferably on a bottom surface of the ink accommodating container. The mechanism for mixing and stirring preferably includes a rotating blade, a rotating shaft, and a motor. The rotating blade is supported by the rotating shaft rotated by the motor, and the rotating blade is rotated by driving the motor.

At least one aspect of the mechanism for heating will be described. The mechanism for heating may be a heater that is in contact with the ink composition A and the aqueous solution B to directly heat them, or a heater that is attached to the outside of the ink accommodating container to heat the container, thereby indirectly heating the ink composition A and the aqueous solution B. The temperature of the heater is not particularly limited, and is, for example, preferably 30°C to 80°C, and more preferably 30°C to 60°C.

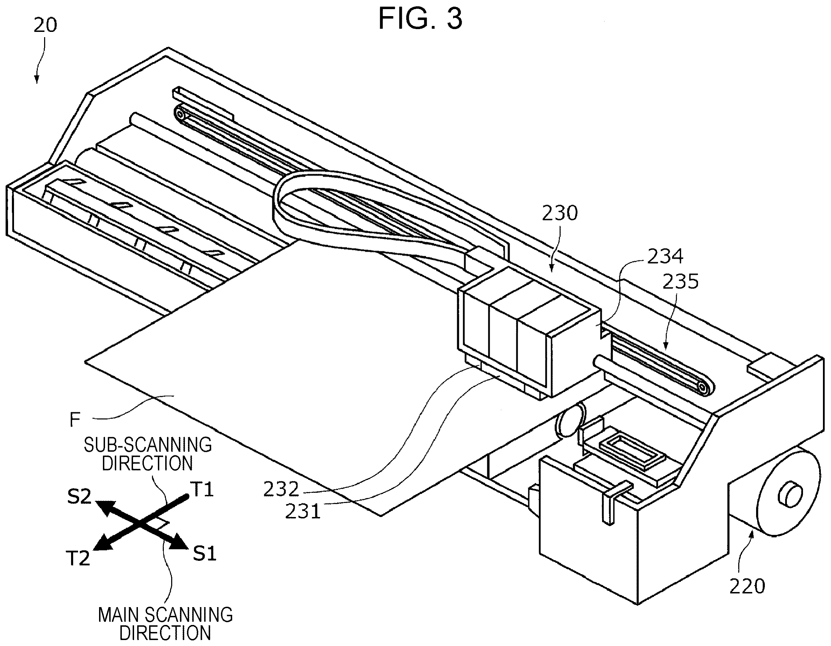

As an example of the ink jet printer, FIG. 3 shows a perspective view of a serial printer. As shown in FIG. 3, a serial printer 20 includes a transport section 220 and a recording section 230. The transport section 220 transports a recording medium F fed to the serial printer to the recording section 230, and discharges the recording medium after recording to the outside of the serial printer. Specifically, the transport section 220 includes each feeding roller and transports the fed recording medium F in a sub-scanning direction T1.

The recording section 230 includes an ink jet head 231 that ejects the ink jet ink composition to the recording medium F fed from the transport section 220, a carriage 234 on which the ink jet head 231 is mounted, and a carriage movement mechanism 235 that moves the carriage 234 in the main scanning directions S1 and S2 of the recording medium F.

In the case of the serial printer, a head having a length smaller than the width of the recording medium is provided as the ink jet head 231, the head moves, and recording is performed in a plurality of passes (multi-pass). In the serial printer, the head 231 is mounted on the carriage 234 that moves in a predetermined direction, and the ink jet ink composition is ejected onto the recording medium by the head moving along with the movement of the carriage. As a result, recording is performed in two or more passes (multi-pass). It is noted that the pass is also referred to as main scanning. Sub-scanning in which the recording medium is transported is performed between the passes. That is, main scanning and sub-scanning are alternately carried out.

The ink jet printer is not limited to the serial method printer, and may be the above-described line method printer.

### 5. Examples

Hereinafter, the present disclosure will be described in more detail with reference to Examples, but the present disclosure is not limited to these examples. Hereinafter, "%" is based on mass unless otherwise specified.

### 5.1 Preparation of Ink Jet Ink Composition

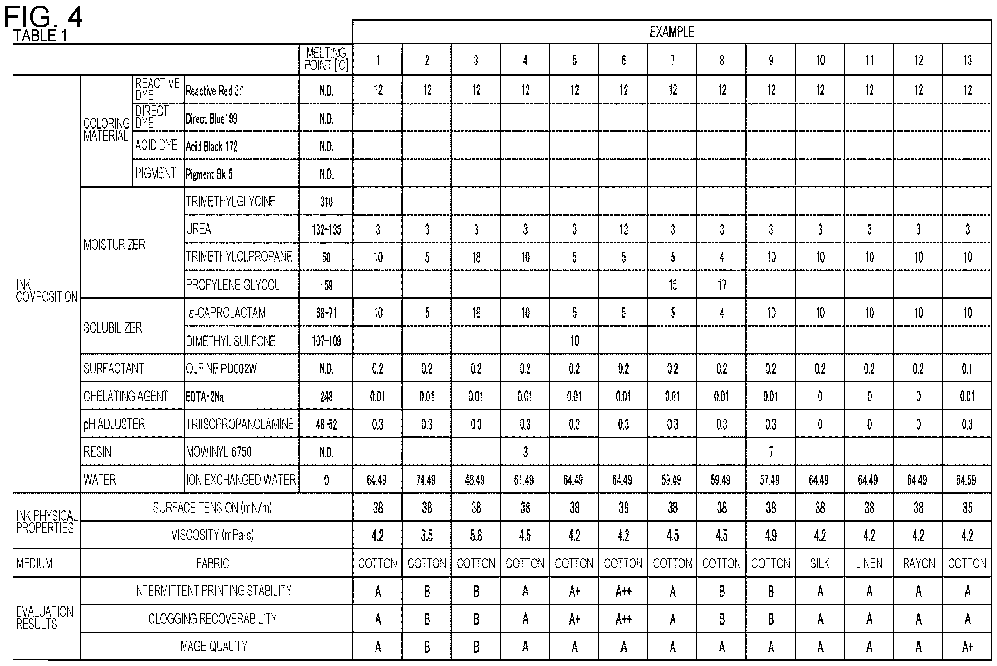

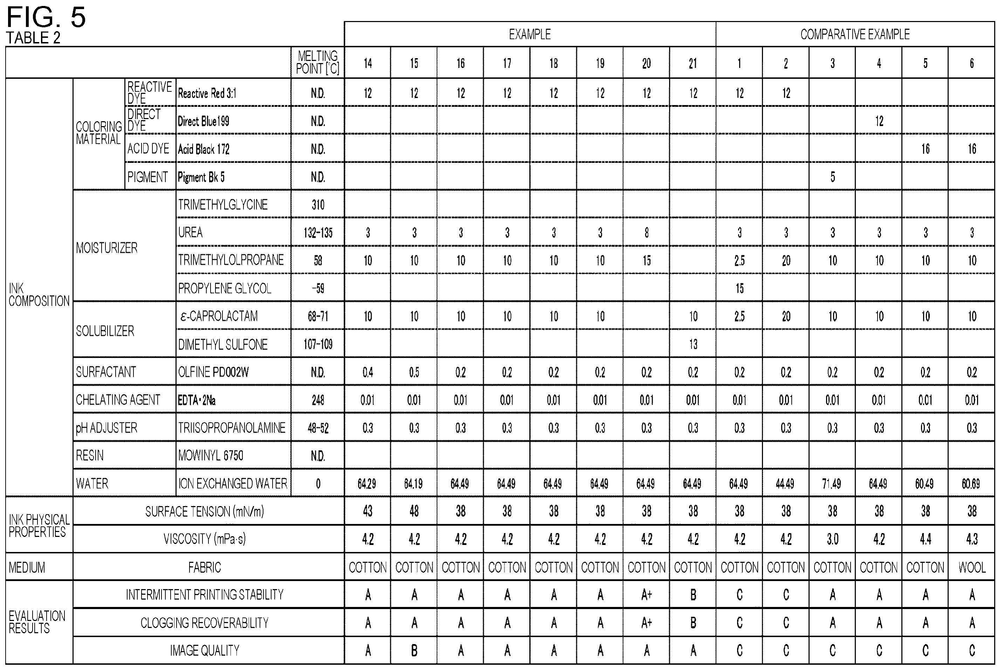

Each component is put into a container so as to have the composition shown in Table 1 (FIG. 4) and Table 2 (FIG. 5), mixed and stirred for 2 hours with a magnetic stirrer, then sufficiently mixed by performing a dispersion treatment with a bead mill filled with zirconia beads having a diameter of 0.3 mm, then stirred for 1 hour, and then filtered using a 5 µm PTFE membrane filter to obtain ink jet ink compositions according to Examples 1 to 15, 20, and 21 and Comparative Examples 1 to 6 and inks before drying according to Examples 16 to 19.

The coloring material used for preparing Comparative Example 3 is mixed with water at a mass ratio of 2:1 (pigment: pigment dispersant) with a pigment dispersant (not shown in table), which is a water-soluble styrene-acrylic resin, in advance, and sufficiently stirred to prepare a pigment dispersion liquid, and the pigment dispersion liquid is used for preparing the ink. In addition, the column of the coloring material describes % by mass of the pigment converted from the solid content concentration of the pigment dispersion liquid.

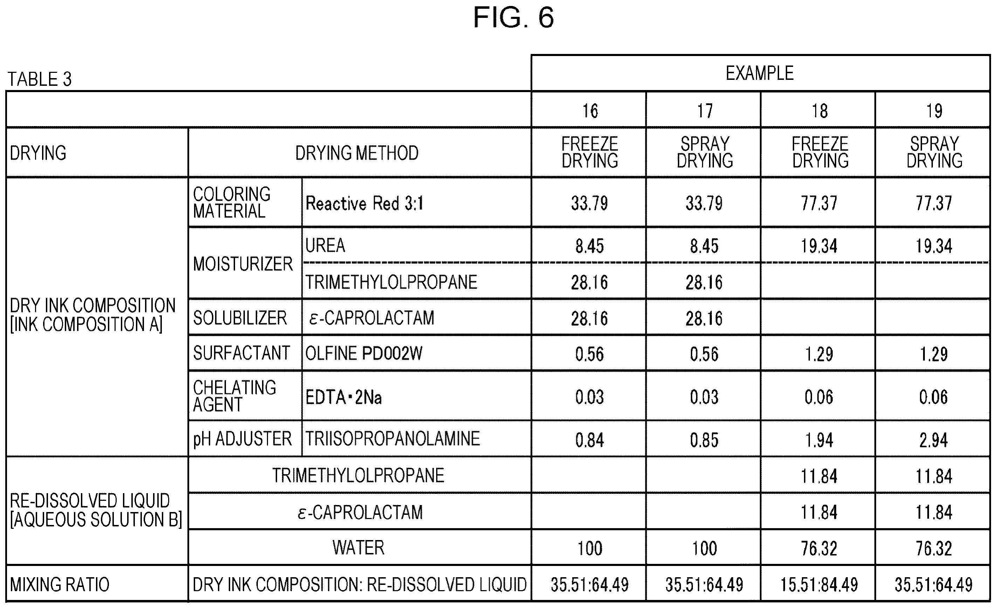

In Examples 16 to 19, the ink before drying is dried using the ink drying method described in Table 3 (FIG. 6) to obtain each dry ink composition (the ink composition A) described in Table 3.

Specifically, 30 g of the ink before drying is put into a 50 ml screw tube, and freeze drying is performed at a trap cooling temperature of -45°C for 10 hours (when drying is not completed, the time is added) by using a device having a model number of "FD-1000" (manufactured by Tokyo Rikakikai Co., Ltd.) to obtain each dry ink composition.

Spray drying is performed under conditions of an inlet temperature of 200°C and an outlet temperature of 60°C using a device having a model number of "ADL311S-A" (manufactured by Yamato Scientific Co., Ltd.) and an organic solvent recovery device "GAS410" (manufactured by Yamato Scientific Co., Ltd.) to obtain each dry ink composition.

Each component is put into a container so as to have the composition shown in Table 3, and sufficiently mixed to obtain each re-dissolved liquid (the aqueous solution B).

Each of the dry ink compositions and each of the re-dissolved liquids are mixed in the combination and the mixing ratio shown in Table 3 to obtain ink jet ink compositions according to Examples 16 to 19.

For the ink jet ink composition according to each example, a surface tension is measured by the Wilhelmy method using a surface tension meter (DY-300, manufactured by Kyowa Interface Science Co., Ltd.), and a viscosity is measured in accordance with JIS Z8809 using a vibration type viscometer (VM-100, manufactured by Sekonic Corporation). Table 1 and Table 2 describe the results.

The following gives a supplementary description for Table 1 and Table 2.
·Olfine PD002W (product name manufactured by Nissin Chemical Co., Ltd., acetylene glycol-based surfactant)
·EDTA·2Na (disodium ethylenediaminetetraacetate dihydrate)
·Mowinyl 6750 (product name of Japan Coating Resin Co., Ltd., acrylic emulsion, active ingredient: 50%)

### 5.2 Evaluation Method

### 5.2.1 Intermittent Printing Stability

The ink jet ink composition according to each example is charged into an ink jet printer "PX-G930" manufactured by Seiko Epson Corporation, the ink jet head is idled for 3 minutes in a 40°C, 20%RH environment, and then the proportion of nozzles that could not be normally ejected is determined, and the intermittent printing stability is evaluated based on the following determination criteria. B or higher is determined to be good.

### Determination Criteria

A++: less than 3%
A+: 3% or more and less than 5%
A: 5% or more and less than 10%
B: 10% or more and less than 20%
C: 20% or more

### 5.2.2 Clogging Recoverability

The ink jet ink composition according to each example is charged into an ink jet printer "PX-G930" manufactured by Seiko Epson Corporation, which is left to stand for 60 hours in a state where the ink jet head is not moisturized by a cap in a 40°C, 20%RH environment, and then nozzle cleaning is repeated, the number of times of cleaning until all the nozzles are recovered is counted, and the clogging recoverability is evaluated based on the following determination criteria. B or higher is determined to be good.

### Determination Criteria

A++: within two times
A+: three times
A: four times
B: five times or six times
C: seven times or more

### 5.2.3 Image Quality

The ink jet ink composition according to each example is charged into an ink jet printer "PX-G930" manufactured by Seiko Epson Corporation, and solid printing is performed on the fabric described in Table 1 or Table 2 at 100% duty. Then, temporary drying is performed for 3 minutes with hot air at 100°C, and then steam is applied at 100°C for 15 minutes. Next, washing is performed at 90°C for 10 minutes using an aqueous solution containing 0.2% by mass of Laccol STA (manufactured by Meisei Chemical Works, Ltd., surfactant). Next, drying with hot air at 100°C is performed for 3 minutes, then the printed surface is visually observed, and the image quality is evaluated based on the following determination criteria. B or higher is determined to be good.

### Determination Criteria

A: No banding unevenness can be observed.
B: Banding unevenness can be observed, but it is on an acceptable level.
C: Banding unevenness can be observed, and it is on an unacceptable level.

### 5.3 Evaluation Results

The evaluation results are shown in Table 1 and Table 2.

From the evaluation results shown in Table 1 and Table 2, the ink jet ink composition according to each of Examples, which contains water, a reactive dye, and a water-soluble compound with a melting point of 50°C or higher, and the content of the water-soluble compound with a melting point of 50°C or higher is 10% by mass or more and 40% by mass or less with respect to the total amount of the ink composition, is good in both the image quality and the clogging recoverability.

In contrast, the ink jet ink composition according to each of Comparative Examples, which does not satisfy the above configuration, is inferior in at least one of the image quality and the clogging recoverability.

The following contents are derived from the above-described embodiments.

An aspect of the ink jet ink composition contains water, a reactive dye, and a water-soluble compound with a melting point of 50°C or higher, and the content of the water-soluble compound with a melting point of 50°C or higher is 10% by mass or more and 40% by mass or less with respect to the total amount of the ink composition.

In the aspect of the ink jet ink composition, the water-soluble compound with a melting point of 50°C or higher may contain any one or more of a moisturizer and a solubilizer with a melting point of 100°C or higher.

In any aspect of the ink jet ink composition, the water-soluble compound with a melting point of 50°C or higher may contain any one or more of a moisturizer and a solubilizer with a melting point of 125°C or higher.

Any aspect of the ink jet ink composition may not contain a compound with a melting point of lower than 50°C (excluding water) or contain the compound with a melting point of lower than 50°C (excluding water) in a content of 15% by mass or less with respect to the total amount of the ink composition.

Any aspect of the ink jet ink composition may not contain a compound with a melting point of lower than 50°C (excluding water) or contain the compound with a melting point of lower than 50°C (excluding water) in a content of 40% by mass or less with respect to the total amount of the ink composition (excluding water).

In any aspect of the ink jet ink composition, the content of a water-insoluble substance may be 5% by mass or less with respect to the total amount of the ink composition.

In any aspect of the ink jet ink composition, the ink jet ink composition may have a surface tension of 45 mN/m or less.

In any aspect of the ink jet ink composition, the ink jet ink composition may have a viscosity of 6 mPa·s or less.

In any aspect of the ink jet ink composition, the ink jet ink composition, the ink jet ink composition may be a freeze-dried ink or a spray-dried ink.

In any aspect of the ink jet ink composition, the ink jet ink composition may be used for textile printing.

An aspect of the ink jet ink composition is an ink jet ink composition containing an ink composition A containing a reactive dye and a water-soluble compound with a melting point of 50°C or higher, and with a content of a substance that is liquid in a 25°C, 1 atm environment of 20% by mass or less with respect to a total amount of the ink composition A; and an aqueous solution B containing water in an amount of 50% by mass or more with respect to a total amount of the aqueous solution B, wherein the content of the water-soluble compound with a melting point of 50°C or higher is 10% by mass or more and 40% by mass or less with respect to the total amount of the ink jet ink composition.

An aspect of the recording method includes an ejecting step of ejecting any aspect of the ink jet ink composition onto a fabric from an ink jet head.

In the aspect of the recording method, the fabric may include any one or more of cotton, silk, linen, and rayon.

An aspect of the method for producing an ink jet ink composition is a method for producing an ink jet ink composition, the method including a mixing step of mixing an ink composition A containing a reactive dye and a water-soluble compound with a melting point of 50°C or higher, and an aqueous solution B containing water in an amount of 50% by mass or more with respect to a total amount of the aqueous solution B, wherein the content of the water-soluble compound with a melting point of 50°C or higher is 10% by mass or more and 40% by mass or less with respect to the total amount of the ink jet ink composition.

The present disclosure is not limited to the above-described embodiments, and various modifications are possible. For example, the present disclosure includes configurations substantially the same as the configuration described in the embodiments, for example, a configuration having the same function, method, and effect, or a configuration having the same object and effect. In addition, the present disclosure includes configurations in which non-essential parts of the configuration described in the embodiments are replaced. In addition, the present disclosure includes configurations that achieve the same operational effects or configurations that can achieve the same objects as those of the configurations described in the embodiments. In addition, the present disclosure includes configurations in which a known technology is added to the configurations described in the embodiments.

## Claims

1. An ink jet ink composition comprising: water;
a reactive dye; and
a water-soluble compound with a melting point of 50°C or higher, wherein a content of the water-soluble compound with a melting point of 50°C or higher is 10% by mass or more and 40% by mass or less with respect to a total amount of the ink composition.

2. The ink jet ink composition according to claim 1, wherein the water-soluble compound with a melting point of 50°C or higher contains any one or more of a moisturizer and a solubilizer with a melting point of 100°C or higher.

3. The ink jet ink composition according to claim 1, wherein the water-soluble compound with a melting point of 50°C or higher contains any one or more of a moisturizer and a solubilizer with a melting point of 125°C or higher.

4. The ink jet ink composition according to claim 1, not comprising a compound with a melting point of lower than 50°C (excluding water) or comprising the compound with a melting point of lower than 50°C (excluding water) in a content of 15% by mass or less with respect to the total amount of the ink composition.

5. The ink jet ink composition according to claim 1, not comprising a compound with a melting point of lower than 50°C (excluding water) or comprising the compound with a melting point of lower than 50°C (excluding water) in a content of 40% by mass or less with respect to the total amount of the ink composition (excluding water).

6. The ink jet ink composition according to claim 1, wherein a content of a water-insoluble substance is 5% by mass or less with respect to the total amount of the ink composition.

7. The ink jet ink composition according to claim 1, wherein the ink jet ink composition has a surface tension of 45 mN/m or less.

8. The ink jet ink composition according to claim 1, wherein the ink jet ink composition has a viscosity of 6 mPa·s or less.

9. The ink jet ink composition according to claim 1, wherein the ink jet ink composition is a freeze-dried ink or a spray-dried ink.

10. The ink jet ink composition according to claim 1, wherein the ink jet ink composition is used for textile printing.

11. An ink jet ink composition comprising: an ink composition A containing a reactive dye and a water-soluble compound with a melting point of 50°C or higher, and with a content of a substance that is liquid in a 25°C, 1 atm environment of 20% by mass or less with respect to a total amount of the ink composition A; and
an aqueous solution B containing water in an amount of 50% by mass or more with respect to a total amount of the aqueous solution B, wherein a content of the water-soluble compound with a melting point of 50°C or higher is 10% by mass or more and 40% by mass or less with respect to a total amount of the ink jet ink composition.

12. A recording method comprising an ejecting step of ejecting the ink jet ink composition according to claim 1 onto a fabric from an ink jet head.

13. The recording method according to claim 12, wherein the fabric includes any one or more of cotton, silk, linen, and rayon.

14. A method for producing an ink jet ink composition, the method comprising a mixing step of mixing an ink composition A containing a reactive dye and a water-soluble compound with a melting point of 50°C or higher, and an aqueous solution B containing water in an amount of 50% by mass or more with respect to a total amount of the aqueous solution B, wherein a content of the water-soluble compound with a melting point of 50°C or higher is 10% by mass or more and 40% by mass or less with respect to a total amount of the ink jet ink composition.
